# EUROPEAN PATENT APPLICATION

(11) **EP 4 239 548 A1**
(43) Date of publication of application: **06.09.2023**
(21) Application number: 23159108.2
(22) Date of filing: 28.02.2023
(51) Int. Cl.: G06Q 10/087

(54) **PORTABLE SURVEY UNIT AND METHOD**

(30) Priority: 04.03.2022 US 202263316553 P
(71) Applicant: Hyster-Yale Group, Inc., Fairview, OR 97024 (US)
(72) Inventor: TAYLOR, Phil, Tadley (GB)
(74) Representative: Bardehle Pagenberg Partnerschaft mbB Patentanwälte Rechtsanwälte

(57) **Abstract**

A survey unit (100, 200) is provided for collecting data related to load locations (352-368) in a facility (350). The survey unit (100, 200) can include a plurality of visual and locational sensors (110, 120, 220, 222, 260, 280, 290) configured to collect data related to the load locations (352-368) in the facility (350). The survey unit (100, 200) can be arranged in a box (101) located on a pallet (170) that can be easily transported by a forklift (300) within the facility (350) and easily moved between different facilities (350) without the need to move the forklift (300). The data collected by the survey unit (100, 200) can be processed to create data, such as a 3D locational map of the load locations (352-368), that can then be used by an AGV (automated guided vehicle) to automatically pick or drop loads in the surveyed facility (350).

## Description

### TECHNICAL FIELD

This disclosure relates generally to tools and processes for mapping locations for automated guided vehicles (AGVs). More particularly, this invention relates to a mechanism and process for mapping a warehouse or other site or facility to provide guidance for an AGV to pick and drop loads.

### BACKGROUND INFORMATION

For an AGV to pick or to drop a load it must know the target location to a reasonably close tolerance (*e.g.,* ± 5 mm). The current options are to use the architectural plans for the warehouse, which may not be accurate; to do a full survey of the site, which is time consuming; or to drive an AGV truck to and position the forks in each of the load locations to capture each of the correct load positions with sensors on the AGV. Unfortunately, that process is limited by the sensors on the truck itself, such as a localization system and fork height measurement devices.

For instance, existing sensors on a robotic truck (*i.e.,* an AGV) can be used to create maps for AGVs by driving the truck around the facility to capture data. Unfortunately, because of cost constraints, these trucks do not typically include all of the sensors needed to create a robust facility map that includes all of the desirable facility layout information, including, for example, the physical layout configuration, load locations, presence or absence of a load, WiFi signal strength, etc. Furthermore, the sensors that are on the truck cannot be readily removed from the truck and used by another vehicle in another location to create location maps of other sites or facilities. Rather, the entire truck must be transported in order to survey other facilities.

### OVERVIEW OF DISCLOSURE

According to the principles and concepts described herein, an easily transportable survey device can be used to survey a facility to provide a robust map of target locations to an AGV. For example, a survey unit comprises a multitude of sensors arranged into a readily transportable unit. The survey unit can, for instance, be arranged in a box that can be carried by a forklift around a facility to create a load location map of the facility that can then be used by an AGV to pick or drop loads. The box can, for example, be arranged on a standard, easily transportable pallet. The sensors can, for instance, gather information such as load locations/positions (including, for example, shelving locations and positions of loads on warehouse shelving), whether there is a load in the load position or not, WiFi (or other network) signal strength throughout the facility, the layout of the facility, and other salient features used by robotic trucks or AGVs to navigate the facility, pick loads, place loads, communicate with central systems, etc.

The principles and concepts described herein enable a conventional forklift or other vehicle to be used to create a robust facility map that can then be used by AGVs to place or collect loads.

In one embodiment configured primarily for indoor use, a portable automated survey unit comprises survey equipment such as a plurality of sensors, cameras, a 2D LIDAR unit, a processing unit, a power supply, a WiFi (or other wireless) communications module, a data storage device, and other desirable sensors and circuitry mounted in a box (or other containment unit) on a pallet (or other portable platform). A forklift (*e.g.,* a reach truck) can drive the survey box horizontally around the facility and manipulate the survey box vertically throughout the site to collect and store all of the information needed to create a robust location map for guiding AGVs to load locations.

In another embodiment, configured primarily for outdoor use, a portable automated survey unit can comprise additional/different survey equipment such as a GPS unit, mobile communications circuitry (*i.e.,* GPRS, 5G), 3D LIDAR, 3D RADAR, an inertial measurement unit (IMU), and infrared sensors, for example. These components can be in addition to, or replace, components of the indoor embodiment. In a further embodiment, the survey unit can be configured with all of the components necessary for either indoor or outdoor surveying and the user can be provided with a mechanism such as a switch or button for selecting between indoor or outdoor use. Alternatively, the survey unit could automatically detect whether it was being used indoor or outdoor based on information from the various sensors and operate in the appropriate mode.

The survey unit preferably includes sensors sufficient to localize the unit, capture pallet (load) locations, capture rack beams, capture key locations, capture WiFi signal strength, etc., as the unit is driven around a facility. Depending on the facility configuration and the camera field of view, in some instances, the survey unit may be arranged on the vehicle forks and may be moved up and down with the forks to fully capture all of the load locations. The data collected by the survey unit could then be post processed with a priori knowledge of racks and pallets along with some assumptions about how load locations form a 2D array in 3D space. A robust facility map can thereby be provided that includes the load locations and orientations defined in at least six degrees of freedom (6DOF), including X, Y, Z coordinates, along with ROLL, PITCH, and YAW, to an accuracy that enables an AGV to accurately position itself in relationship to the load location points to pick or place loads.

In particular, software can be provided that collects the data from the various sensors and processes the data into a 3D representation of the surveyed space that includes each of the desired load locations. The processing software can, for instance, include a perception module that uses the collected data to provide object mapping, drivable area detection, and pallet fine localization features, for example. The object mapping feature, for instance, uses collected data to create a map of the objects that can be observed and recognized within the warehouse or other facility. The drivable area detection feature can recognize the portion of the floor (or ground) that can be used for the truck movements. And the pallet fine localization feature can provide high-accuracy localization for each of the pallets or other loads to be dropped or picked. In this manner, utilizing the survey unit and processing software according to the principles of the present inventive concepts, a complete map of load locations can be created by simply driving the AGV having the survey unit around the facility. This easy-to-use survey unit and accompanying software thereby enables any forklift driver to create a robust map of their facility that can enable the automated pickup and delivery of loads using an AGV.

Therefore, according to the principles and concepts described herein, creating location maps can be done faster and more reliably than was conventionally possible. Defining load locations, in particular, can be done more quickly and accurately. Furthermore, the survey can be completed in advance of the availability of AGVs at the facility. In addition, the survey unit can be readily transported between different locations to create location maps for various facilities without the need to transport an entire AGV.

Various aspects, embodiments, and configurations of the principles and concepts described herein are possible without departing from the principles disclosed herein. The inventive concepts are therefore not limited to any of the particular aspects, embodiments, or configurations shown or described herein.

Various features, benefits, and configurations incorporating the principles and concepts described and illustrated herein will be readily apparent to those of ordinary skill in the art based on this disclosure and all such features, benefits and configurations are considered within the scope of the present invention.

In one embodiment, a portable survey unit comprises a plurality of visual and locational sensors that permit it to sense and collect data related to the locations of loads within a facility. A communications module is further provided to permit the survey unit to communicate the collected data with an external device. A software module receives the collected data and processes the data to provide a 3D representation of load locations that can be used by an AGV to accurately pick or drop loads within the facility.

In some additional, alternative, or selectively cumulative embodiments, the plurality of visual and locational sensors comprises a plurality of monocular or stereo cameras and/or a 2D LIDAR unit.

In some additional, alternative, or selectively cumulative embodiments, the portable survey unit further comprises a processing unit, a power supply, and a data storage device.

In some additional, alternative, or selectively cumulative embodiments, the communications module comprises a WiFi module or a mobile communications module.

In some additional, alternative, or selectively cumulative embodiments, the survey unit is arranged in a box that is mounted on a pallet to be easily carried by a forklift and be readily moveable between facilities.

In another embodiment, a portable survey unit includes a plurality of visual and locational sensors that permit it to sense and collect data related to loads in either an indoor or an outdoor facility. A data storage device is provided to store the collected data. A communications module is further provided to permit the survey unit to communicate the collected data with an external data processing device comprising software that converts the collected data into a 3D map of load locations within the facility.

In some additional, alternative, or selectively cumulative embodiments, the plurality of visual and locational sensors comprises 3D RADAR or 3D LIDAR sensors, a vision system comprising a plurality of monocular or stereo cameras, an infrared sensor, and an inertial measurement unit (IMU).

In some additional, alternative, or selectively cumulative embodiments, the communications module comprises a WiFi module and a mobile communications module (such as a GPRS).

In some additional, alternative, or selectively cumulative embodiments, the portable survey unit is arranged in a box that can be easily transported by a forklift and be easily transferred between facilities.

Additional aspects and advantages will be apparent from the following detailed description of example embodiments, which proceeds with reference to the accompanying drawings.

### Brief Description of the Drawings

The foregoing and additional objects, features, and advantages of the present inventive concepts will become more readily apparent from the following detailed description of preferred embodiments, depicted in the attached drawings, which are briefly described as follows:
Figure 1 is a simplified isometric drawing of a portable survey unit configured according to principles of the present inventive concepts primarily for use in indoor facilities.
Figure 2 is a schematic block drawing of a portable survey unit configured according to principles of the present inventive concepts primarily for use in outdoor facilities.
Figure 3 is a simplified perspective drawing of a forklift being used in an aisle of a warehouse (*i.e.,* an indoor facility) to create a location map using the portable survey unit of Figure 1.
Figure 4A is a schematic flow diagram illustrating how data collected using the portable survey unit of Figure 1 or Figure 2 is processed to create a location map.
Figure 4B is a schematic flow diagram of the Augmented Sensing Device block of Figure 4A.
Figure 4C is a schematic flow diagram of the Observation Filtering block of Figure 4A.
Figure 4D is a schematic flow diagram of the Warehouse Cell Association block of Figure 4A.
Figure 5 is a schematic flow diagram illustrating how collected data from cameras can be used in a drivable area application to create a drivable area map.
Figure 6 is a schematic flow diagram illustrating a pallet localization application for taking collected data and processing it into pallet localization information.
Figure 7 is a schematic software diagram illustrating how the process of Figure 4 can be implemented in the Python programming language.
Figure 8 is a schematic software diagram illustrating how the process of Figure 4 can be implemented using multiple programming languages.

### Detailed Description of Embodiments

Example embodiments are described below with reference to the accompanying drawings. Unless otherwise expressly stated in the drawings, the sizes, positions, etc. of components, features, elements, etc., as well as any distances therebetween, are not necessarily to scale, and may be disproportionate and/or exaggerated for clarity.

The terminology used herein is for the purpose of describing particular example embodiments only and is not intended to be limiting. As used herein, the singular forms "a," "an" and "the" are intended to include the plural forms as well, unless the context clearly indicates otherwise. It should be recognized that the terms "comprise," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise specified, a range of values, when recited, includes both the upper and lower limits of the range, as well as any sub-ranges therebetween. Unless indicated otherwise, terms such as "first," "second," etc. are only used to distinguish one element from another. For example, one element could be termed a "first element" and similarly, another element could be termed a "second element," or vice versa. The section headings used herein are for organizational purposes only and are not to be construed as limiting the subject matter described.

Unless indicated otherwise, the terms "about," "thereabout," "substantially," etc. mean that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art.

Spatially relative terms, such as "right," left," "below," "beneath," "lower," "above," and "upper," and the like, may be used herein for ease of description to describe one element's or feature's relationship to another element or feature, as illustrated in the drawings. It should be recognized that the spatially relative terms are intended to encompass different orientations in addition to the orientation depicted in the figures. For example, if an object in the figures is turned over, elements described as "below" or "beneath" other elements or features would then be oriented "above" the other elements or features. Thus, the exemplary term "below" can, for example, encompass both an orientation of above and below. An object may be otherwise oriented (*e.g.,* rotated 90 degrees or at other orientations) and the spatially relative descriptors used herein may be interpreted accordingly.

Unless clearly indicated otherwise, all connections and all operative connections may be direct or indirect. Similarly, unless clearly indicated otherwise, all connections and all operative connections may be rigid or non-rigid.

Like numbers refer to like elements throughout. Thus, the same or similar numbers may be described with reference to other drawings even if they are neither mentioned nor described in the corresponding drawing. Also, even elements that are not denoted by reference numbers may be described with reference to other drawings.

Many different forms and embodiments are possible without deviating from the spirit and teachings of this disclosure and so this disclosure should not be construed as limited to the example embodiments set forth herein. Rather, these example embodiments are provided so that this disclosure will be thorough and complete, and will convey the scope of the disclosure to those skilled in the art.

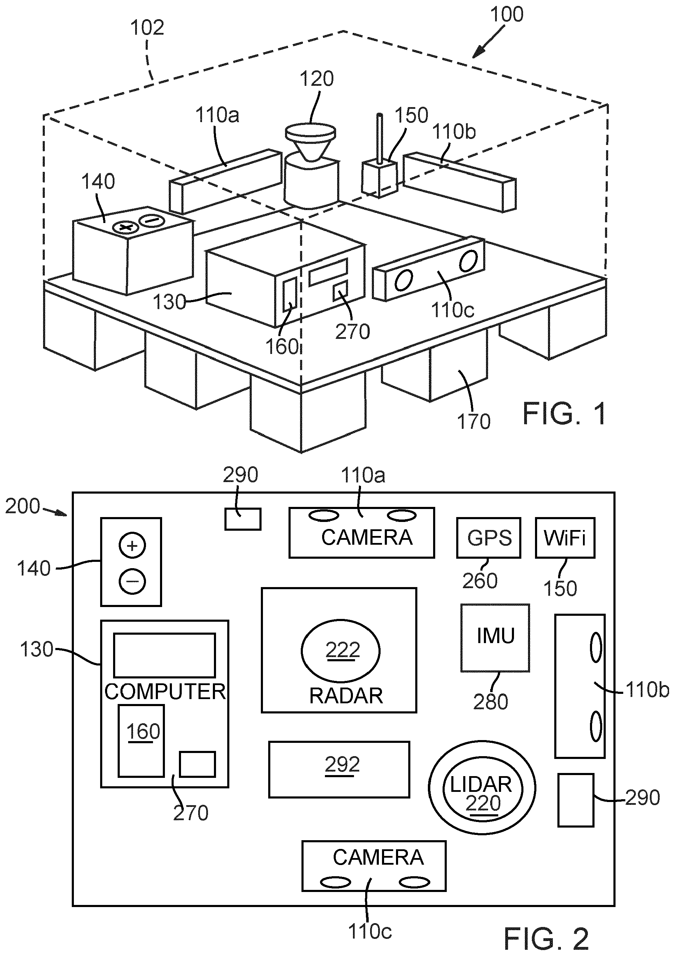

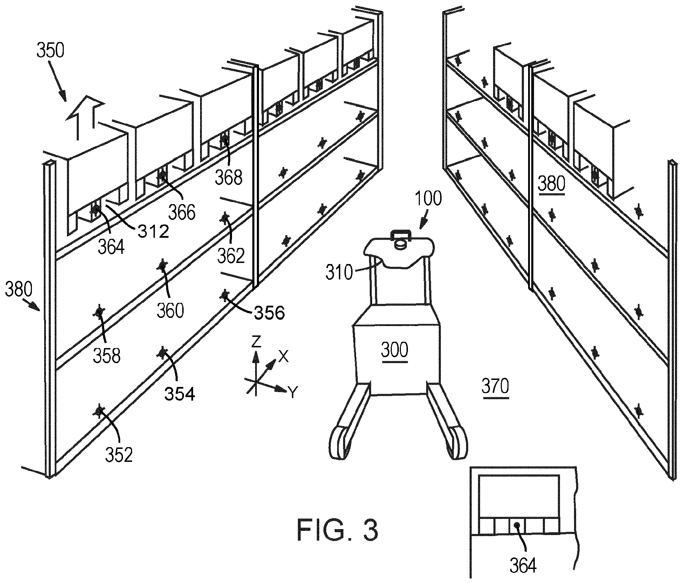

Referring to Figures 1 and 2, a portable survey unit 100 comprises a plurality of sensors and other electronic components arranged into a readily transportable unit. The survey unit 100 can, for instance, be arranged on a base, stand, or platform 170, one example of which is a standard pallet 170 as shown in Figure 1. The base, stand, or platform 170 is preferably easily transportable, such as by a forklift 300 (see Figure 3) or other suitable vehicle around a facility to create a load location map of the facility that can then be used by an AGV to pick or drop loads. The survey unit 100 can optionally include a cover 102, which may be removable or transparent (like, for example, a radome) to the sensors of the survey unit 100. The platform 170 and the optional cover 102, if present, together constitute a housing 101 for the portable survey unit. Neither the platform 170, the cover 102, nor the housing 101 is a part of the vehicle that carries the survey unit 100, thus enabling the survey unit 100 to be transported independently of the vehicle that carries the survey unit 100 around a facility.

The survey unit 100, for instance, can include sensors sufficient to localize the unit, capture pallet (load) locations, capture rack beams, capture key locations, capture WiFi (or other wireless) signal strength, etc. The plurality of sensors can, therefore, include sensors that gather information such as load locations/positions (including, for example, shelving locations and positions of loads on warehouse shelving), whether there is a load in the load position or not, WiFi signal strength throughout the facility, the layout of the facility, and other salient features used by robotic trucks or AGVs to navigate the facility, pick loads, place loads, communicate with central systems, etc.

In the embodiment depicted in Figure 1, a portable automated survey unit comprises survey equipment such as stereo cameras 110 (*e.g.,* a left-looking camera 110a, a forward-looking camera 110b, and a right-looking camera 110c), a 2D LIDAR unit 120, a processing unit (computer) 130, a power supply 140, a WiFi communications module 150, a data storage device 160 (which may be integrated within the computer 130 or separate from the computer 130), and other desirable sensors and circuitry mounted in a box (or other containment unit) 101 arranged on a pallet (or other portable platform) 170. The box (or other containment unit) 101 may have a removable cover 102.

As illustrated in Figure 2, in another embodiment, configured primarily for outdoor use, a portable automated survey unit 200 can comprise additional/different survey equipment than that included in the primarily indoor unit 100. For example, the outdoor survey unit 200 may include additional equipment and sensors such as a GPS unit 260, mobile communications circuitry (*i.e.,* GPRS, 5G) 270, 3D LIDAR 220, 3D RADAR 222, an inertial measurement unit (IMU) 280, and infrared sensors 290, for example. These components can be in addition to, or replace, components of the primarily indoor embodiment 100. In addition, other sensors or wired or wireless communications equipment (including Bluetooth) 292 could be included in either embodiment. While Figure 2 illustrates one possible arrangement of the components of the automated survey unit 200, other arrangements are possible. For example, it may be beneficial that one or more of the 3D LIDAR 220, 3D RADAR 222, and infrared sensors 290 be located on or near an edge, such as the front edge or a side edge, of the box or platform.

In a further embodiment (not shown), the survey unit can be configured with all of the components necessary for either indoor or outdoor surveying and the user can be provided with a software switch or hardware mechanism such as a switch or button for selecting between indoor or outdoor use. Alternatively, the survey unit could automatically detect whether it was being used indoors or outdoors, based on information from the various sensors, and then operate in the appropriate mode based on that determination.

Referring now to Figure 3, the survey unit 100 may be carried by a forklift (*e.g.,* a reach truck) 300. The forklift 300 can drive the survey unit 100 horizontally around an indoor facility 350 and additionally manipulate the survey unit 100 vertically using its forks 310, as required, to collect and store all of the information needed to create a robust location map for guiding AGVs to load locations. Specifically, as shown in Figure 3, the indoor facility 350 may include a plurality of load locations 352, 354, 356, 358, 360, 362, 364, 366, 368 arranged in different horizontal and vertical positions on racks 380 arranged along an aisle 370. There may be thousands of load location points in a warehouse. Each load location may be occupied (*e.g.,* with a loaded or empty pallet), empty, or partially loaded. As illustrated in Figure 3, load location points 364, 366, and 368 are occupied, whereas load location points 352, 354, 356, 358, 360, and 362 are empty. As the forklift is driven down the aisle 370, the cameras (visual sensors) 110 and other sensors collect images and other data related to the load locations 352-368. The collected data is stored in the data storage device 160 and transmitted either simultaneously with or soon after collection or at some later time via the communications module 150 to an external computing device (not shown) for processing. Alternatively, the software for processing the collected data may be contained in the computer 130 arranged in the survey unit 100 and the communications module 150 can communicate the software output (*e.g.,* a 3D location map or data representing the same) to an external device. Alternatively, the data storage device 160 may be removable to facilitate transport of it and the collected data and/or software output thereon. Alternatively, the processing unit 120 may be equipped with a data interface (*e.g.,* USB or other type port) through which the collected data and/or software output can be transferred to another computer directly via a cable or an intermediary data storage device (*e.g.,* thumb drive).

The data collected by the survey unit 100 may include continuously recorded visual (camera), LIDAR, RADAR, or the like "video" or discrete snapshots of the same. The data collected by the survey unit 100 may be embedded or otherwise combined with other data, such as forklift location data (*e.g.,* local or facility localization data or GPS data), ranging measurement, etc. The data may be appropriately time-stamped, location-stamped, or otherwise synchronized. The data collected by the survey unit 100 can be post processed with *a priori* knowledge of racks and pallets along with some assumptions about how load locations form a 2D array in 3D space. For example, load location points can be determined or estimated using one or more of geometry, planar knowledge, knowledge of the racks (*e.g.,* dimensions such as shelf height and depth, as well as support member thickness), location information from the localization system of the forklift 300, and ranging measurements measured by the survey unit 100. A robust facility map can thereby be provided that includes information regarding the load locations and orientations defined in as many as six degrees of freedom (6DOF), including X, Y, Z coordinates, along with roll, pitch, and yaw, to an accuracy that enables an AGV to accurately position itself in relationship to the load location points 352-368 to pick or place loads. In some cases, X, Y, and Z coordinates for a load location point may be sufficient. In some cases (*e.g.,* when depth is not important or can be simplified out of consideration), only two coordinates may be sufficient. In other cases, additional information, such as roll, pitch, and/or yaw may be needed or useful in addition to coordinate information. As shown in Figure 3, there is one point per load location, such as shown in the front-face view for the load location point 364 in the lower right portion of Figure 3. However, it should be understood that each load location could be specified by two or more points. For example, a load location point can be specified as two points - one for each of two forks (*e.g.,* two pallet fork pockets, preferably the center of each) for a load location. Two points per load location may be useful where a facility uses pallets with different sizes or geometries and the forklifts in use can adjust the separation distance between the forks.

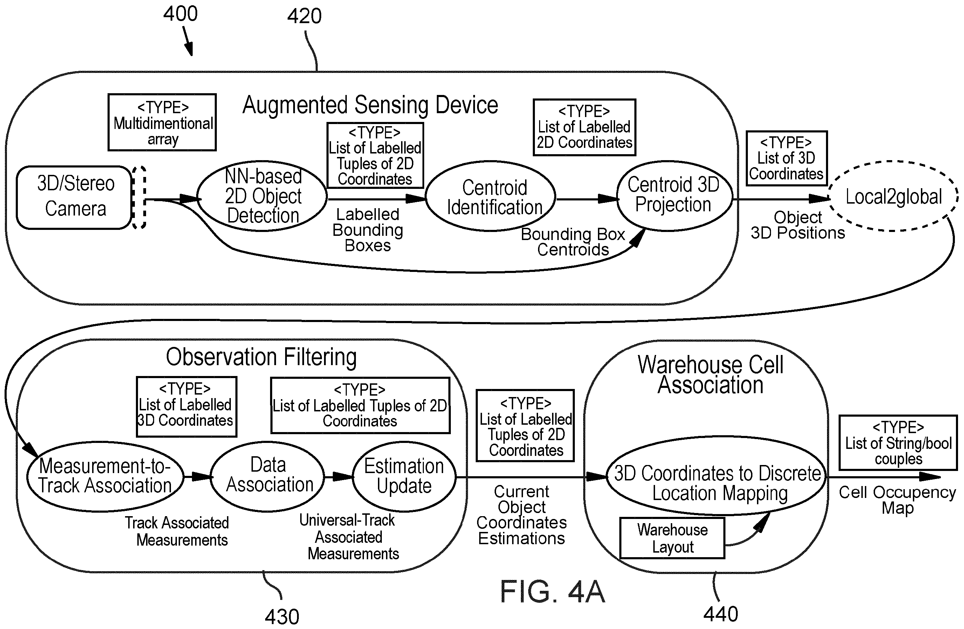

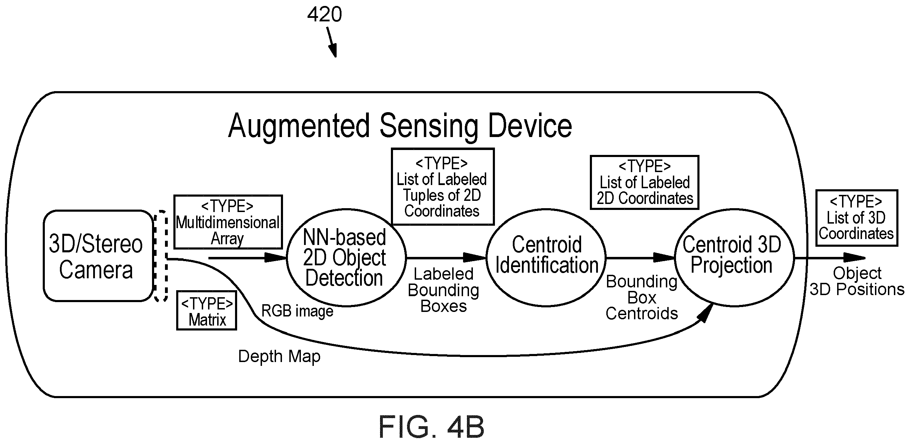

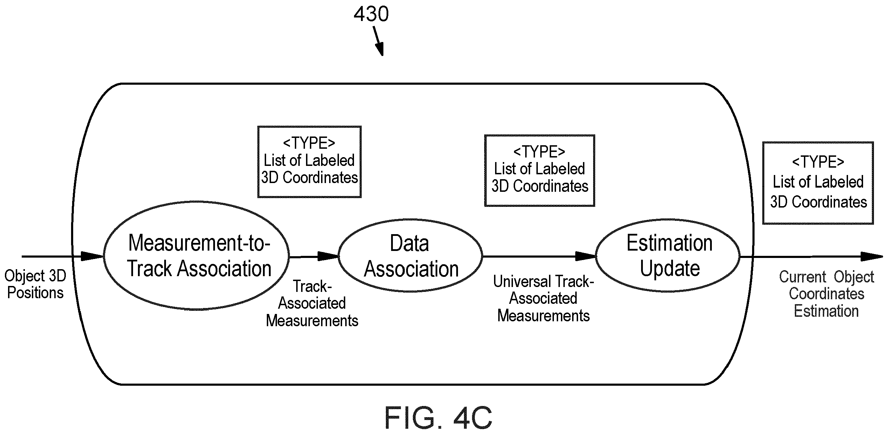

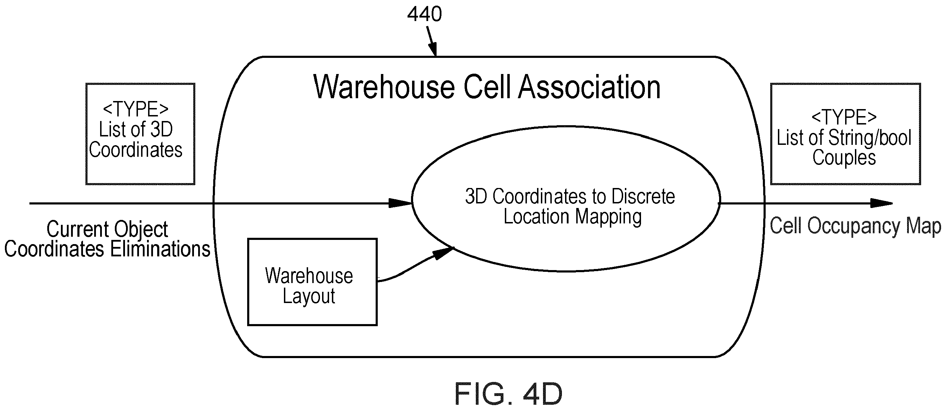

Referring now to Figures 4-7, software 400 can be provided that receives the collected data from the various sensors in the survey unit 100 or 200 and processes the data into a 3D representation of the surveyed space that includes each of the desired load locations 352-368. The processing software can, for instance, include a perception module that uses the collected data to provide object mapping, drivable area detection, and pallet fine localization features, for example. The object mapping feature, for instance, uses collected data to create a map of the objects that can be observed and recognized within the warehouse or other facility. The drivable area detection feature can recognize the portion of the floor (or ground) that can be used for the truck movements. And the pallet fine localization feature can provide high-accuracy localization for each of the pallets or other loads to be dropped or picked. In this manner, utilizing the survey unit 100, 200 and processing software 400 according to the principles of the present inventive concepts, a complete (or partial) map of load locations can be created by simply driving a forklift or other vehicle having the survey unit around the facility. This easy-to-use survey unit and accompanying software thereby enables any forklift driver to create a robust map of a facility that can enable the automated pickup and delivery of loads using an AGV.

Referring specifically to Figures 4A and 4B, object mapping can be performed using an augmented sensing device and process block 420. Specifically, the augmented sensing device block 420 provides time-uncorrelated, noisy position measurements about objects of interest and thereby operates as a type of abstract sensor. Using this block, the image data from the cameras can be collected to provide a multidimensional array or matrix that can be processed using object detection and centroid identification processes with 2D coordinates to produce a centroid 3D projection that provides 3D object positions using 3D coordinates. Multiple cameras can be used to provide an extended field of view and enhanced mapping functions.

Referring now specifically to Figures 4A and 4C, the observation filtering block 430 provides position estimation for objects of interest in the warehouse (or other facility) reference frame. More specifically, the 3D object positions from the augmented sensing device block can be correlated with track-associated measurements to provide location estimation updates for objects of interest.

Referring now specifically to Figures 4A and 4D, the warehouse cell association block 440 enables integration between an automated vehicle system and the customer warehouse management system (WMS), by translating coordinates into warehouse locations. More specifically, the warehouse cell association block 440 takes the object coordinate estimations from the observation filtering block 430 and, using warehouse layout information, maps the 3D object coordinates to discrete warehouse locations to create a warehouse cell occupancy map.

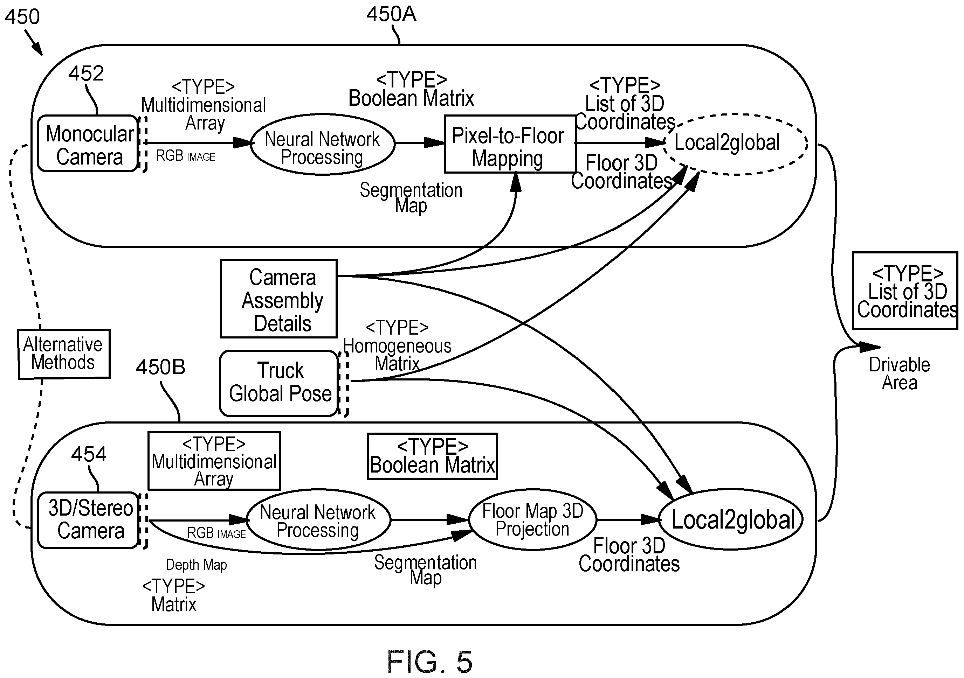

Referring now to Figure 5, two alternative methods of providing drivable area maps are shown. In general, the drivable area detection application 450 recognizes obstacle-free portions of the warehouse (or other facility) floor or ground to provide a drivable area map. Different alternatives can take advantage of monocular cameras or depth/stereo cameras. In a first alternative 450A using a monocular camera 452 that provides a 2D input, the drivable area detection is performed by NN-based image segmentation followed by a static association between pixels and floor coordinates.

In an alternative drivable area detection application 450B, stereo/depth cameras 454 can be used to provide a 3D input to the drivable area detection application 450. Using the 3D input, the drivable area detection is performed by NN-based image segmentation followed by a matching step between the floor mask and a point-cloud. In either case, the output is a drivable area map. Other considerations in creating the drivable area map include walking lanes or other restricted traffic zones, and whether or not a flat floor assumption is appropriate.

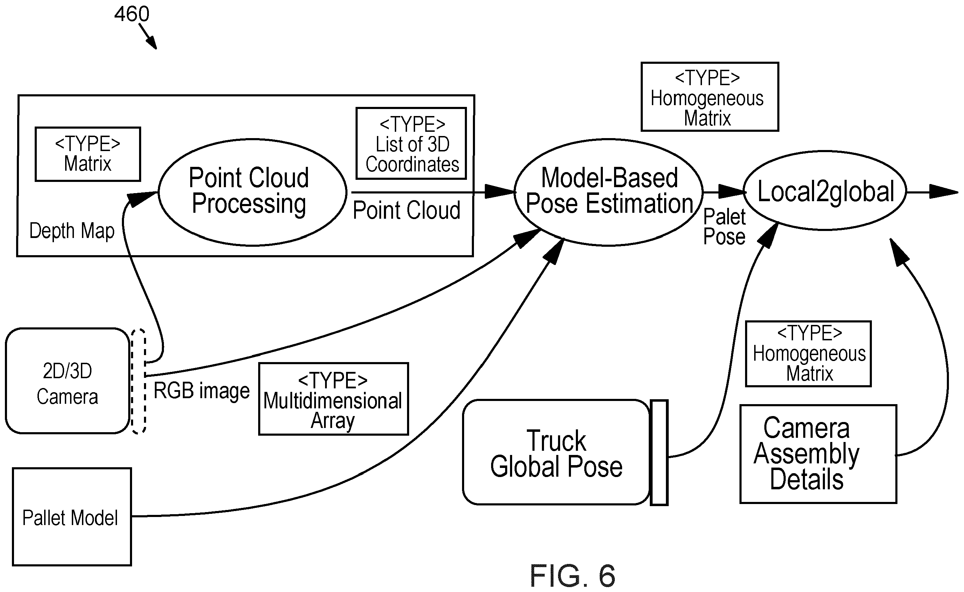

Referring now to Figure 6, a pallet fine localization application 460 provides an accurate pose estimation for an individually framed pallet. Specifically, image data from the cameras is used along with point cloud processing and model-based pose estimation in conjunction with truck and camera assembly information to create a homogenous matrix of pallet localization information.

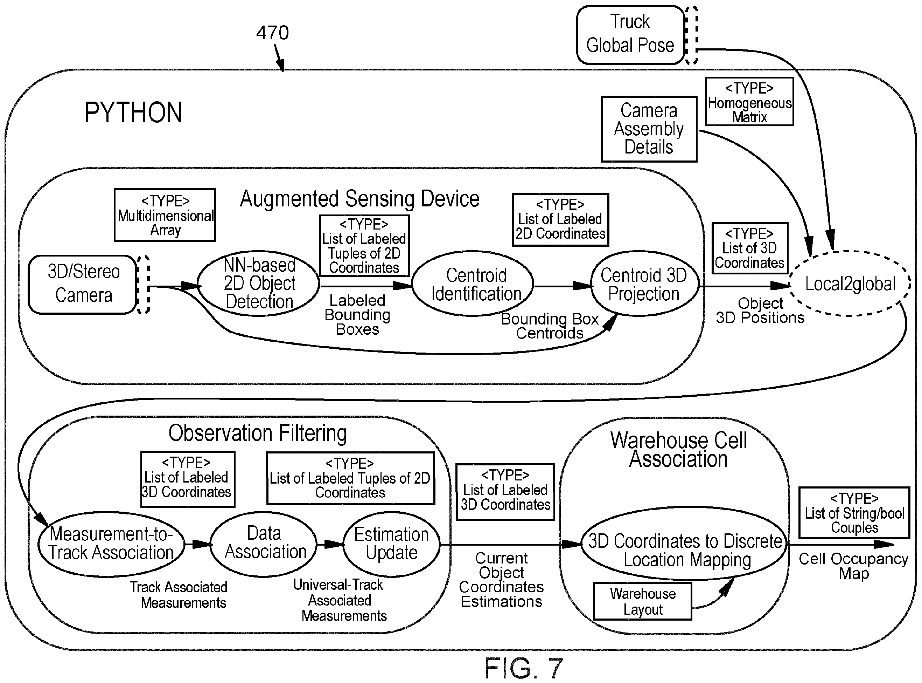

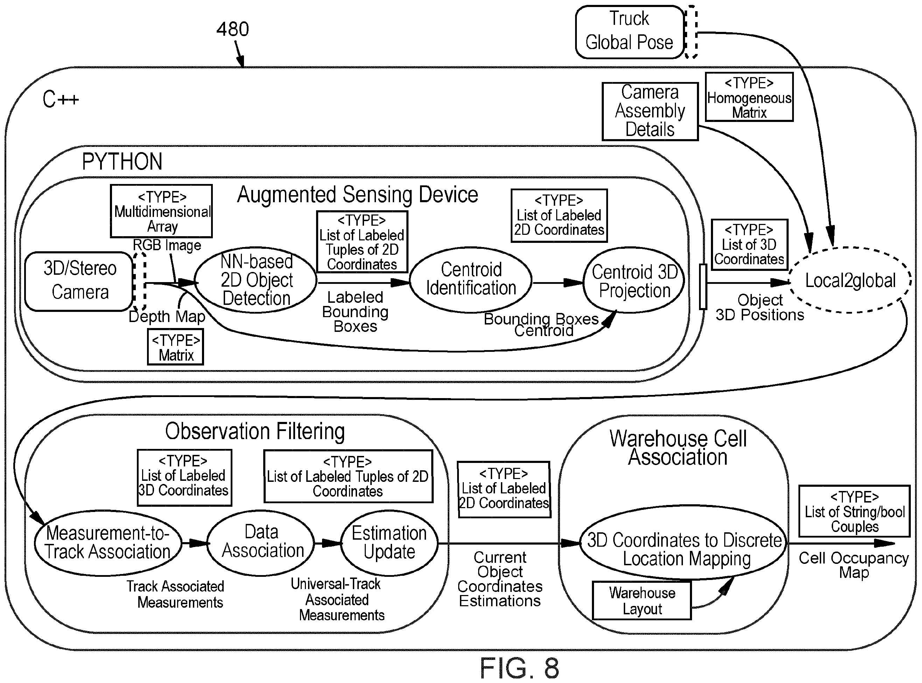

Referring additionally to Figures 7 and 8, the various applications and software processes can be implemented using one or more different programming languages. In the embodiments shown, Python (*e.g.,* in a Python implementation 470) or a combination of Python and C++ (*e.g.,* in a combined implementation 480) are used. However, any desired programming language(s) could be used and the invention is not limited to the use of any particular programming language or combinations of programming languages.

Therefore, according to the teachings herein, creating location maps can be done faster and more reliably than was conventionally possible. Defining load locations, in particular, can be done more quickly and accurately. Furthermore, the survey can be completed without the need for an AGV and can therefore be completed in advance of the availability of AGVs at the facility. In addition, the survey unit 100, 200 can be readily transported between different locations to create location maps for various facilities without the need to transport an entire AGV. All or just some of these advantages may be possible to varying degrees with various embodiments of the invention according to the teachings herein.

### CONCLUSION

Various other improvements are also contemplated and numerous variations to the specific designs identified above are possible without departing from the spirit and scope of the inventive concepts. Having described and illustrated principles of the present inventive concepts on in various preferred embodiments thereof, it should be apparent that the invention can be modified in arrangement and detail without departing from such principles.

The terms and descriptions used above are set forth by way of illustration and example only and are not meant as limitations. Those skilled in the art will recognize that many variations, enhancements and modifications of the concepts described herein are possible without departing from the underlying principles of the invention. For example, skilled persons will appreciate that the subject matter of any sentence or paragraph can be combined with subject matter of some or all of the other sentences or paragraphs, except where such combinations are mutually exclusive. The scope of the invention should therefore be determined only by the following claims, claims presented in a continuation patent application, and equivalents to those claims.

## Claims

1. A survey unit (100, 200) for collecting data related to load locations (352-368) in a facility (350), the survey unit (100, 200) comprising:
a platform (170) configured to be carried around the facility; and
a plurality of visual and locational sensors (110, 120, 220, 222, 260, 280, 290) located on the platform (170) and configured to collect data related to the load locations (352-368) in the facility (350), wherein the collected data is sufficient to create a facility map comprising load location information that can be used by an AGV to pick or to drop loads at the load locations (352-368).

2. A survey unit (100, 200) according to claim 1, further comprising:
a software module (400) configured to use the collected data to create the facility map.

3. A survey unit (100, 200) according to claim 1, further comprising:
a communications module (150) configured to communicate the collected data to a software module (400) configured to use the collected data to create the facility map.

4. A survey unit (100, 200) according to one of the claims 1 to 3, wherein the plurality of visual and locational sensors comprise a plurality of cameras (110) and a LIDAR (120, 220) or RADAR unit (222).

5. A survey unit (100, 200) according to one of the claims 1 to 4, wherein the platform (170) is a pallet configured to be carried by forks (310) of a forklift (300).

6. A survey unit (100, 200) according to one of the claims 1 to 5, wherein the plurality of visual and locational sensors (110, 120, 220, 222, 260, 280, 290) comprise a plurality of cameras (110), an infrared sensor (290), an inertial measurement unit (280), and a GPS unit (260).

7. A survey unit (100, 200) according to one of the claims 1 to 6, further comprising:
a data storage unit (160); and
a computing unit (130).

8. A survey unit (100, 200) according to claim 7, wherein data from the sensors (110, 120, 220, 222, 260, 280, 290) can be stored in the data storage unit (160) and used by the computing unit (130) to create the facility map.

9. A method for creating a 3D location map of a facility (350), the method comprising:
using a forklift (300) to transport a survey unit (100, 200) around the facility (350), wherein the survey unit (100, 200) collects data related to load locations 352-368 in the facility 350, wherein the collected data is sufficient to create a 3D location map that can be used by an AGV to automatically pick and drop loads in the facility (350).

10. A method according to claim 9, further comprising:
processing the collected data to create the 3D location map.

11. A method according to one of the claims 9 or 10, further comprising:
transferring the collected data to a processing unit (130) configured to create the 3D location map based on the collected data.

12. A method according to one of the claims 9 to 11, wherein the survey unit (100, 200) is on a platform (170) and wherein the forklift (300) comprises forks (310) and carries the platform (170) around the facility (350) on the forks (310).

13. A method according to claim 12, wherein the forklift (300) raises or lowers its forks (310) as necessary to collect data related to load locations (352-368).

14. A method according to claim 11, wherein transferring the collected data to the processing unit (130) comprises transferring the data to an external device using a communications module (150) arranged in the survey unit (100, 200).

15. A method according to one of the claims 9 to 14, further comprising:
loading the survey unit (100, 200) onto forks (310) of the forklift (300) before using the forklift (300) to transport the survey unit (100, 200) around the facility (350); and
moving the forks (310) of the forklift (300) up and down as necessary to collect data related to load locations (352-368).
